(19) **Europäisches Patentamt**
**European Patent Office**
**Office européen des brevets**

(11) **EP 4 628 842 A1**

(12) **EUROPEAN PATENT APPLICATION**

(43) Date of publication:
**08.10.2025 Bulletin 2025/41**

(21) Application number: **25156971.1**

(22) Date of filing: **10.02.2025**

(51) International Patent Classification (IPC):
**G01B 21/18** (2006.01)   **G01D 3/02** (2006.01)
**G01B 21/04** (2006.01)   **G01B 21/08** (2006.01)

(52) Cooperative Patent Classification (CPC):
**G01B 21/18; G01B 21/042; G01B 21/085;**
**G01D 3/022; G01D 18/008**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **03.04.2024  IT 202400007315**

(71) Applicants:
• **Prysmian S.p.A.**
**20126 Milan (IT)**

• **Omnisens S.A.**
**1110 Morges (CH)**

(72) Inventors:
• **RIZZO, Giuseppe**
**20126 Milano (MI) (IT)**
• **ROCHAT, Etienne**
**1110 Morges (CH)**

(74) Representative: **Praxi Intellectual Property Milano**
**Via Mario Pagano, 69/A**
**20145 Milano (IT)**

(54) **METHOD AND SYSTEM FOR CALCULATING THE DEPTH OF BURIAL IN POWER CABLES**

(57)     Method for calculating (200, 300) the depth of burial of a power cable (4) placed under a bed (3) of an aquatic environment (1) and provided by a temperature sensor (6), comprising a calibration procedure (200) including: processing (205) a cable current trend ($I(t, z)$), a bed temperature trend ($T_{SB}(t, z)$) to produce a one-to-one correspondence (CRR(dob,T); IC) correlating possible depth-of-burial values with possible temperature values provided by said temperature sensor (6). The method further includes: performing experimental measurement (201) of the depth of burial of said power cable (4) obtaining measured depths (M-DOB(t,z)) and processing (208, 209) the measured depths, the one-to-one correspondence and the measured temperature trend to obtain a temperature calibration function ($err_j(t, Tf)$) to correct temperature measured values provided by the temperature sensor.

FIG. 3

**Description**

BACKGROUND

Technical field

The present disclosure relates to techniques for calculating the depth of burial of submarine power cables.

Description of the Related Art

Several systems for the online evaluation of the Depth of Burial (DoB) of undersea cables are available on the market. These systems have the scope of outputting the distance between the cable and the seabed over the route of the feeder. The aim said of monitoring system is to detect if part of the cable is directly exposed to the water and it is vulnerable to possible damages related to the interaction with external bodies such as anchors.

The main known methods can be divided into two branches. The depth of burial can be measured directly through periodic surveys or can be estimated through mathematical models based on the thermal behaviour of the cable. The first type methods have the advantage of being very precise but are relatively expensive and cannot provide information in the period between one measurement and the next.

The method based on thermal models provide output data whose precision strongly depends on the reliability of the input data and parameters. Thermal models for depth of burial calculation are typically used for the real-time calculation of a temperature that is compared to that measured at the same location in real time. The input data to perform this calculation are the load current, the temperature measured at a point inside or near the cable and the ambient temperature typically provided as the seabed temperature. Once the comparison between measured temperatures and the results of a thermal model is performed, a second mathematical model is used to estimate the depth of burial.

The following documents described depth of burial evaluation methods based on thermal models:

[1] Qishun Li, Yanpeng Hao, Peng Zhang, et al. "A Method for Detecting the Burial Depth of ± 500 kV XLPE DC Submarine Cables Based on Equivalent Thermal Circuit and Optical Fiber Monitoring Temperature", Authorea. April 04, 2023.

[2] Y. Zhang, Q. Li, Y. Yang, P. Zhang and Y. Hao, "A Burial Depth Detection Method for Three-Core 220 kV Submarine Cables Based on the Optical Fiber Monitoring Temperature," 2023 IEEE 4th International Conference on Electrical Materials and Power Equipment (ICEMPE), Shanghai, China, 2023, pp. 1-4.

[3] Jonathan LUX, Thomas CZERNIUK, Martin OLSCHEWSKI, Wieland HILL; NKT Photonics GmbH, Cologne (Germany), June 2019, " Determination of the Depth of Burial of Submarine Power Cables from Temperature Measurements in Real-Time," 10th International Conference on Insulated Power Cables;

[4] J. Lux, M. Olschewski, P. Schäfer and W. Hill, "Real-Time Determination of Depth of Burial Profiles for Submarine Power Cables," in IEEE Transactions on Power Delivery, vol. 34, no. 3, pp. 1079-1086, June 2019.

The Applicant observes that uncertainties in thermal model parameters, in current and temperature measurements or in seabed temperature assessments lead to an error in the depth of burial estimation.

Document EP4119966-A discloses a burial state analysis of an electrical power cable employing load temperature correlation analysis.

BRIEF SUMMARY OF THE DISCLOSURE

The Applicant has noticed that the known techniques for evaluating the depth of burial of submarine cables that are based on thermal models does not show satisfying reliability in the depth of burial estimation.

The Applicant has found that a method based on a processing of depths of burial values calculated by means of a thermal model and depth of burial values obtained by experimental surveys during an observation period allows constructing a calibration function to be used correct temperature values measured outside said observation period, reducing error in the depth of burial estimations.

According to a first aspect, the present disclosure refers to a method for calculating the depth of burial of a power cable placed under a bed of an aquatic environment, comprising:

a calibration procedure including:

providing a current trend representing a time and position trend of load current flowing in the power cable, said time varying in an observation period and said position varying along a route of the power cable;

providing a bed temperature trend representing a time and position trend of a temperature of said bed;

configuring a thermal model software representing a thermal behavior of a system comprising: the power cable, said bed and a temperature sensor associated to at least a portion of said power cable;

providing by the temperature sensor a measured temperature trend as function of the time and the position;

processing the current trend and the bed temperature trend, considering the thermal model software, to produce a one-to-one correspondence correlating possible depth-of-burial values with possible temperature values provided by said temperature sensor;

obtaining measured depths from experimental measurements of the depth of burial of said power cable;

processing the measured depths, the one-to-one correspondence and the measured temperature trend to obtain a temperature calibration function to correct temperature measured values provided by the temperature sensor outside the observation period.

According to an embodiment, said one-to-one correspondence has one of the following forms: interpolation curve, mathematical function, correlating data table.

In an embodiment, processing the current trend and the bed temperature trend, considering the thermal model software, to produce the one-to-one correspondence comprises:

processing the current trend and the bed temperature trend by the thermal model software to provide calculated cable temperature trends each associated to depth-of-burial predefined attempt values;

processing the calculated cable temperature trends to produce the one-to-one correspondence.

In an embodiment, processing the measured depths, the one-to-one correspondence and the measured temperature trend comprises:

processing the the measured depths, on the basis of the interpolation curves so as to obtain first temperature trend associated to the measured depths;

defining a temperature difference trend by computing a difference between the first temperature trend and the measured temperature trend; wherein temperature difference trend is based on said observation period.

In an embodiment, generating the temperature calibration function comprises:
configuring the calibration function so as to reproduce the temperature difference trend for time values included in said observation period and providing, in a measuring period external to said observation period, a plurality of calibration values each associated to a sensor temperature value assumable by said temperature sensor.

In an embodiment, said temperature calibration function is defined by: a first addend depending on an integral over the measuring period of a first difference between a temperature trend obtained by the temperature sensor and an average temperature value; a second addend linearly depending on said first difference.

In an embodiment, said temperature calibration function is further defined by a plurality of constant values including: a third addend representing a systematic error; a first weight for the first addend; a second weight for the second addend; a value defining said measuring period.

In an embodiment, said constant values are computed by minimizing a statistic quantity expressing a difference between temperature calibration function and the temperature difference trend for the time values included in said observation period.

In an embodiment, said constant values are computed by a machine learning technique.

In an embodiment, said thermal model software is configured according to the following data: stratigraphy of the power cable; positions of the temperature sensor with respect corresponding cross sections of the power cable; thermal characteristics of the sand/soil under said bed.

In an embodiment, the method further comprises a calculation procedure comprising:

providing a further current trend representing a corresponding time and position trend of a further load current flowing in the power cable in a time measuring interval;

providing a further bed temperature trend representing a corresponding time and position trend of a further temperature of said bed;

processing the further current trend and the further bed temperature trend by the thermal model software to provide further calculated cable temperature trends each associated to corresponding depth-of-burial attempt values,

providing by the temperature sensor a further measured temperature trend as function of the time and the position;

correcting said further measured temperature trend by said temperature calibration function obtaining a corrected temperature trend;
processing the further calculated cable temperature trends and the corrected temperature trend to produce a resulting depth-of-burial trend.

In an embodiment, processing the further calculated cable temperature trends and the corrected temperature trend to produce the resulting depth-of-burial trend comprises:

processing the further calculated cable temperature trends and the corrected temperature trend to produce a further one-to-one correspondence correlating further possible depth-of-burial values with further possible temperature values provided by said temperature sensor;
associating the corrected temperature trend to the resulting depth-of-burial trend by means of further one-to-one correspondence.

In an embodiment, said temperature sensor is one of the following devices: a fiber optic sensor; a Distributed Temperature Sensor system DTS; a plurality of resistance temperature detectors, RTD; wherein: the temperature sensor is associated to the power cable according one of the following modalities: the temperature sensor is embedded in the power cable; the temperature sensor is placed in the proximity of the power cable.

In accordance with a second aspect the present disclosure relates to a cable depth evaluation system comprising:

a temperature sensor associated to at least a portion of a power cable placed under a bed of an aquatic environment, the temperature sensor being configured to provide a measured temperature trend as function of time, varying in an observation period, and position, varying along a route of the power cable;
a processor comprising:

-    a thermal model software representing a thermal behavior of a thermal system comprising: the power cable, said bed and the temperature sensor; the thermal model software;
-    a depth-of-burial calculation software cooperating with the thermal model software so as to:

acquire a current trend representing a time and position trend of load current flowing in the power cable;
acquire a bed temperature trend representing a time and position trend of a temperature of said bed;
process the current trend and the bed temperature trend, considering the thermal model software, to produce a one-to-one correspondence correlating possible depth-of-burial values with possible temperature values provided by said temperature sensor;
acquire measured depths obtained by experimental measurements of the depth of burial of said power cable;
process the measured depths, the one-to-one correspondence and the measured temperature trend to obtain a temperature calibration function to correct temperature measured values provided by the temperature sensor outside the observation period.

In an embodiment of said cable depth evaluation system, the thermal model software is configured to process the current trend and the bed temperature trend to provide calculated cable temperature trends each associated to depth-of-burial predefined attempt values, and the depth-of-burial calculation software is configured to process the calculated cable temperature trends to produce the one-to-one correspondence.

According to a third aspect, the present disclosure relates to an electrical power transmission arrangement comprising a power cable configured to be placed under a bed of an aquatic environment and said cable depth evaluation system.

## BRIEF DESCRIPTION OF THE DRAWINGS

Further characteristics and advantages will be more apparent from the following description of the various embodiments given as a way of an example with reference to the enclosed drawings in which:

FIG. 1 schematically shows an aquatic environment, a buried submarine cable and an example of a depth evaluation system;
FIG. 2 schematically shows said depth evaluation system and sensors included in said system;
FIG. 3 shows by function blocks an example of a method of calibrating said depth evaluation system;
FIG. 4 shows examples of predefined attempt depth of burial values;
FIG. 5 shows an example of calculated cable temperature trends and a measured temperature trend, for a specific distance value;

FIG. 6 shows an example of an interpolation curve employed to associate depth of burial values to cable temperature values;

FIG. 7 shows the interpolation curve employed to determine a temperature difference through a measured depth of burial value and a calculated depth of burial value;

FIG. 8 shows by function blocks an example of a method for calculating the depth of burial, subsequent to said method of calibrating;

FIG. 9 shows a temperature correction trend (curve A) obtained by an error function in accordance with said method for calibrating and another temperature correction (curve B) associated to a temperature difference trend.

FIG. 10 three example of calculated cable temperatures for three different values of the depth of burial and a corrected temperature trend.

## DETAILED DESCRIPTION

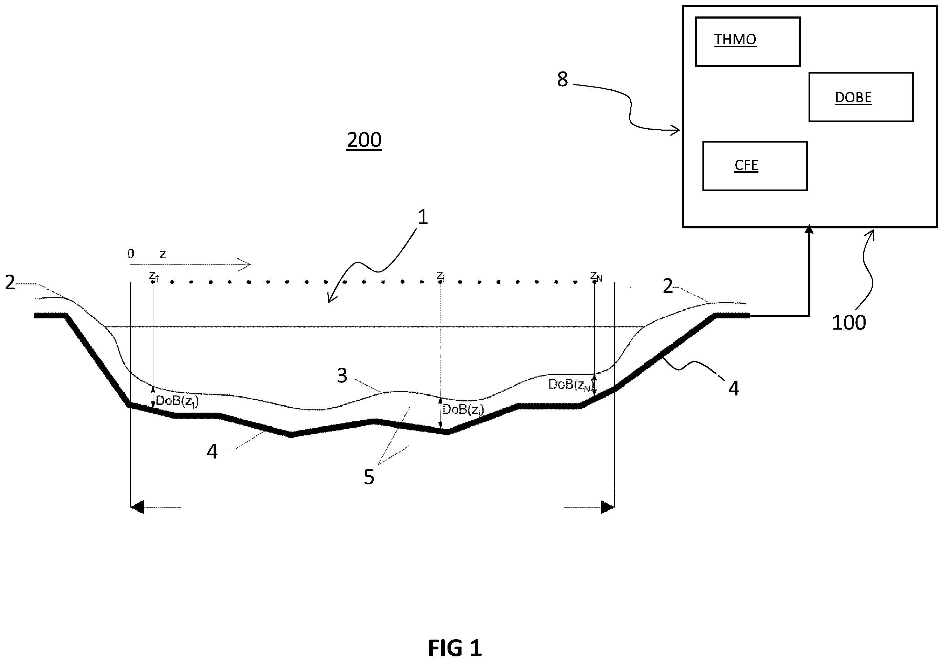

FIG. 1 shows an electrical power transmission system 200 partially implemented in a body of water 1 (as an example, a sea) limited by land portions 2 and a seabed 3. The electrical power transmission system 200 comprises a submarine power cable 4, buried in sand and/or soil 5 of the body of water. Alternatively, the body of water 1 can be part of an ocean, a lake, a river or another type of aquatic environment. The submarine cable 4 is an HV (High Voltage) cable, that can be of conventional type.

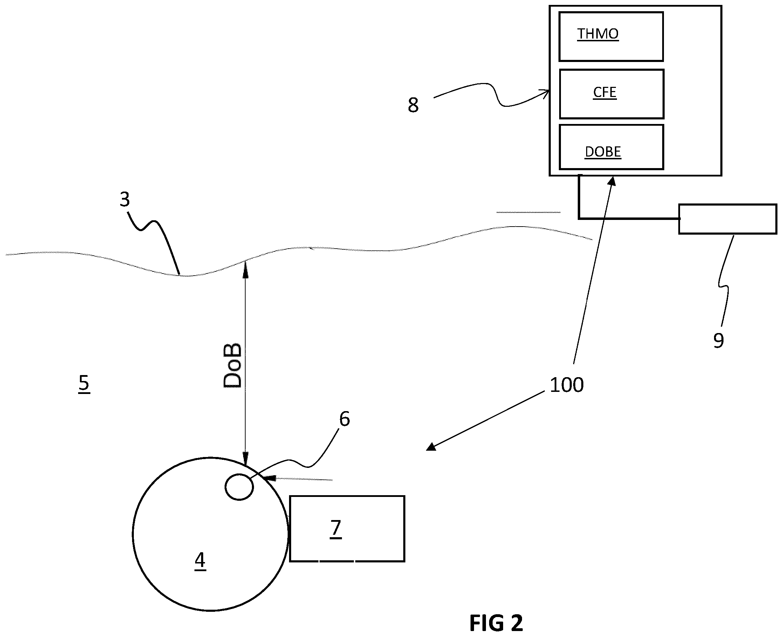

The electrical power transmission system 200 comprises a depth evaluation system 100 configured to evaluate the depth of burial of undersea cables is schematically shown in the above-mentioned FIG.1 and in FIG. 2. The depth evaluation system 100 comprises at least one temperature sensor 6, at least one load current sensors 7 (schematically represented in FIG. 2) and at least one computer 8.

The temperature sensor 6 is configured to provide temperature distributions over the submarine cable 4. The temperature sensor 6 is associated with the submarine cable 4 and can be an embedded in the submarine cable 4 or placed in the proximity of such submarine cable 4. In many embodiments, the temperature sensor 6 is fiber optic sensor such as a Distributed Temperature Sensor system, DTS, comprising an optical fibre cable housed in a metal (e.g. steel) tube for protection purposes. According to another example, the temperature sensor 6 comprises a plurality of resistance temperature detectors (RTDs) distributed along the length of the submarine cable 4 or other types of punctual thermometers.

The load current sensors 7 are configured to provide values of the load current $I(t, z)$ flowing in the submarine cable 4 over the cable length. The load current sensors 7 may include current transformers or amperemeters which can be connected to an interface communication, e.g. a Supervisory Control and Data Acquisition, SCADA, not shown in the drawings.

The computer 8 (such as an example, a microprocessor, an ASIC- Application Specific Integrated Circuit - or a personal computer) can be placed on the land 2 at one end of the submarine cable 4 or can be remote from such end and connected (with wires, which may include optical fibres, or in a wireless modality) to the temperature sensor 6 and the load current sensors 7, to acquire data provided by said sensors.

The system 100 may further comprise one or more seabed sensors 9, which can be analogous to the temperature sensor 6, configured to provide temperature values of the seabed 3. The seabed sensors 9 can be placed on the seabed 3 or near the seabed (as an example, on a platform), into proximity of the area where the submarine cable 4 is buried or up to some kilometres far away from the cable area, since it is deemed that the seabed temperature is quite uniform. The seabed sensors 9 are connected to the computer 8.

The temperature of the seabed 3 can be alternatively obtained through mathematical models taking into account the water surface temperature, the water depth and the characteristics of the seabed.

Historical seabed temperature data can be stored in the computer 8 to be processed when necessary, in addition to or in replacement of the seabed sensor 9.

The computer 8 comprises the following software modules: a thermal model THMO, a calibration function engine CFE and a depth of burial engine DOBE.

The thermal model software THMO represents a thermal behavior of a system comprising: the power cable 4, said bed 3 and a temperature sensor 6. More particularly, the following data are employed to define the thermal model TMHO:

a) stratigraphy of the submarine cable 4 (i.e. diameter and material of each layer included in the submarine cable 4);
b) positions of the temperature sensor 6 with respect corresponding cross sections of the submarine cable 4;
c) thermal characteristics of the sand/soil 5;
d) time trend of the temperature of the seabed 3 (obtainable by historical data or directly measured by seabed sensors 9).

The depth of burial engine DOBE is a software configured to operate in a calibration procedure and in a depth calculation method. In the calibration procedure, the depth of burial engine DOBE produces a one-to-one correspondence CRR(dob, T) correlating possible depth-of-burial values with possible temperature values that can be provided by said temperature sensor 6. In the depth calculation method, the depth of burial engine DOBE produces a trend of the depth-of-burial of the submarine cable 4, from a measured temperature trend provided by the temperature sensor 6 and further data provided by the thermal model software THMO, as it will be better clarified in the following description.

The calibration function engine CFE is a software that cooperates with the depth of burial engine DOBE and is configured to generate an error function to be employed to correct temperature measured values provided by the temperature sensor 6, outside the observation period.

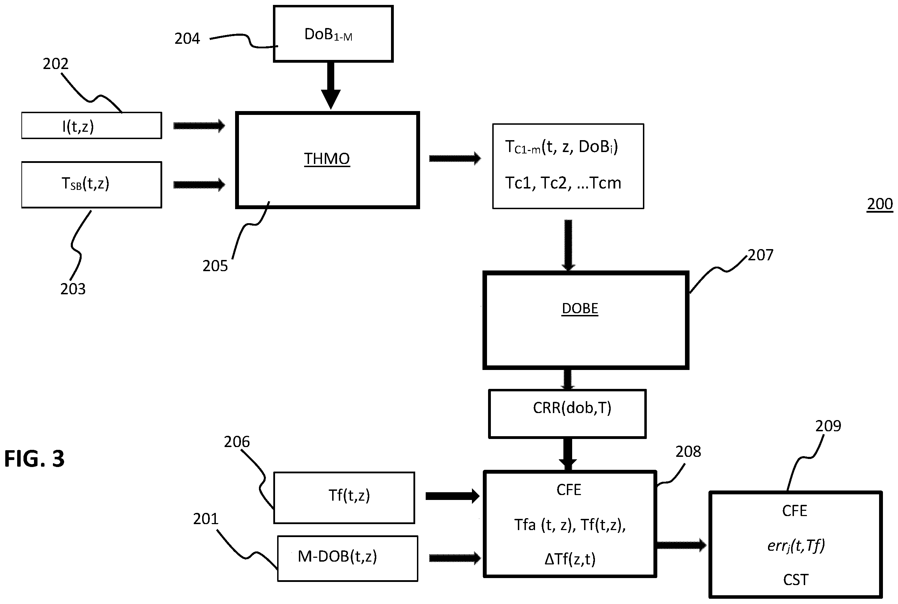

A method 200, employable as procedure for calibrating the system 100, is described with reference to FIG. 3. The method 200 is carried out in an observation Period P and includes a first step 201 of performing experimental measurements of the depth of burial of the submarine cable 4 on several times $[t_1, t_2, ...tx]$, laying in the observation period Po and for a plurality of longitudinal positions $(z: z_1, ...z_i,... z_N)$ over an axis z, following the route of the submarine cable 4.

The observation period Po covers a time interval between a first and a last survey and can be, as ax example, between 4 and 16 weeks, depending on the availability of data obtained by one or more surveys as well as on the applied load to the submarine cable 4.

For each positions z; a plurality of depth values $d_{zi}(t1)$, $d_{zi}(t2)$... $d_{zi}(tx)$ are measured. By performing a liner interpolation of depth values $d_{zi}(t1)$, $d_{zi}(t2)$... $d_{zi}(tx)$ a corresponding depth function $dob_{z1}(t)$ is obtained. The experimental measurements and the subsequent interpolation provide a plurality of functions $dob_{z1}(t)$, $dob_{z2}(t)$ , ... $dob_{zi}(t)$, ... $dob_{zn}(t)$, each expressing the depth of burial as a function of the time t, for the corresponding position $z_1, ...z_i,... z_N$. The above measurements can be carried out by separate surveys, and the above indicated measured depth functions $dob_{z1}(t)$, $dob_{z2}(t)$ ... $dob_{zn}(t)$ (that can be stored into the computer 8) are overall indicated as measured depths M-DOB(t,z) in FIG. 3.

It is observed that instead of performing a plurality of measurements at different times $[t_1, t_2, ...tx]$, a set of measurements at different positions $[z_1, ...z_i,... z_N]$ carried out at a single time tj can be used. In this case, it is assumed that the depth of burial of the submarine cable 4 does not significantly change during the observation period Po considered for the calibration. In this situation, the measured depths M-DOB(t,z) indicated in FIG. 3 represents a depth of burial $dob_{tj}(z)$ expressing the depth as a function of the position z, at the time tj, that is considered constant over time. In this case, a short observation period Po, is required to have a good reliability of the calibration method 200, for example between 4 and 16 weeks.

Moreover, in a second step 202 a load current I(t) flowing through a conductor of the submarine cable 4 is estimated or measured by the load current sensor 7, as function of the time t. In case of relative long cables, the load current I(t,z) is evaluated also as function of the longitudinal position z $(z_1, ...z_i,... z_N)$.

In a third step 203, a seabed temperature $T_{SB}(t, z)$, expressing the temperatures of the seabed 3 as a function of the time t and the longitudinal position z, is measured by the seabed sensor 9 or obtained from stored historical data.

In the subsequent steps, the load current I(t,z) and the seabed temperature TSB(t, z) are processed by the thermal model THMO and the depth of burial engine DOBE to produce the one-to-one correspondence CRR(dob, T) that correlates possible depth-of-burial values with possible temperature values that can be provided by said temperature sensor 6.

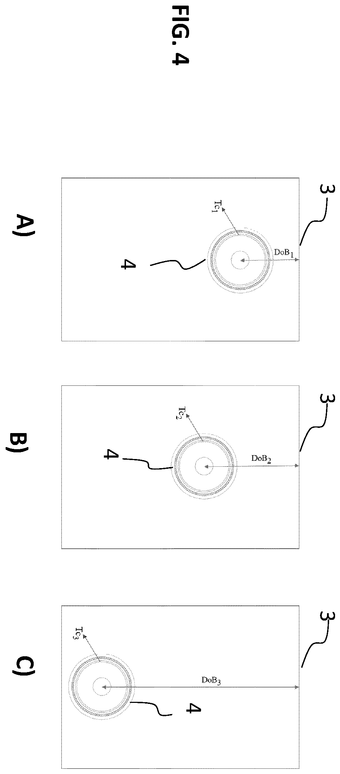

According to the method represented in FIG. 3, in a fourth step 204 a group of attempt values $DoB_{1-M}$ are defined. Each of the attempts values $DoB_{1-M}$ represents a possible value of the depth of burial of the submarine cable 4. As an example, three different attempt values are predefined: a first value $DoB_1$, a second value $DoB_2$ and a third value $DoB_3$. According to a particular example, the first value $DoB_1$ is a minimum measurable value (e.g., between 0.00 and 0.5 m), the second value $DoB_2$ is a value close to the depth of burial established when the submarine cable 4 has been buried in the sand/soil 5 (e.g., between 1.00 m and 1.5 m) and the third value $DoB_3$ is a values close to (inferior to) the maximum calculable value. FIG. 4 shows, as an example, the three attempt values: $DoB_1$, $DoB_2$ and $DoB_3$ considering relative sections of the submarine cable 4.

In a fifth step 205, the load current I(t,z), the seabed temperature $T_{SB}(t, z)$ and the attempts values $DoB_{1-M}$ are provided as input to the thermal model THMO which processes the input functions I(t,z) and $T_{SB}(t, z)$ and calculates a cable temperature Tc(t, z, $DoB_m$), expressing the temperatures at the position of the temperature sensor 6 as a function of the time t and the longitudinal position z, for each attempt value $DoB_m$ of the group $DoB_{1-M}$. The cable temperature Tc(t, z, $DoB_m$) is a temperature trend estimated by the thermal model THMO that represents the temperature behaviour that the temperature sensor 6 would measure if the submarine cable 4 was buried at the depth $DoB_m$.

Considering three attempt values $DoB_1$-$DoB_3$, the thermal model THMO provides a plurality of calculated cable temperatures $T_{C1-m}(t, z, DoB_i)$ including three cable temperature trends $T_{C1}(t, z, DoB_i)$ at the position of the temperature sensor 6, $T_{C2}(t, z, DoB_2)$ and $T_{C3}(t, z, DoB_3)$, also symbolically indicated in FIG. 4.

In a sixth step 206, temperature measurements are performed employing the temperature sensor 6, so as to obtain a measured temperature trend Tf(t, z), as a function of the time t and the distance z. As already indicated, the observation period $P_O$ can be divided into M time steps, $t_1, t_2, ..., t_j, ..., t_M$ and the longitudinal extension of the evaluation into N distance values $z_1, z_2, ..., z_i, ..., z_N$.

In a seventh step 207, the plurality of calculated cable temperatures $T_{C1-m}(t, z, DoB_i)$ are provided to the depth of burial engine DOBE which performs a processing so as to provide the one-to-one correspondence CRR(dob, T) above-defined.

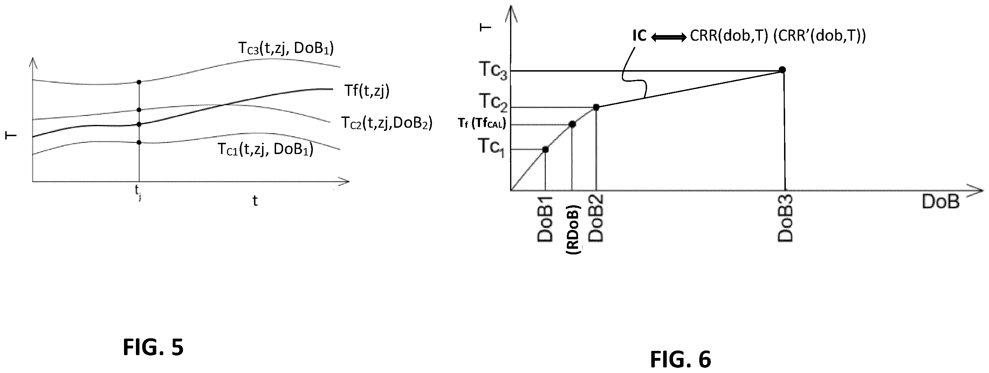

In greater detail, the depth of burial engine DOBE operates on each time steps $t_1$- $t_M$ and for each z values $z_1$-$z_N$. FIG. 5, which refers to the situation of FIG. 4, shows exemplary trends of the calculated cable temperatures $T_{C1}$ (t, zj, $DoB_1$), $T_{C2}$(t, zj, $DoB_2$), $T_{C3}$(t, zj, $DoB_3$), obtained by the DOBE, for a specific distance value zj.

According to this example, the depth of burial engine DOBE selects three temperature values assumed by each of the above-mentioned trends, for the time step tj: $T_{C1}$, $T_{C2}$, $T_{C3}$. Each of the selected calculated temperature values $T_{C1}$, $T_{C2}$, $T_{C3}$ is associated to a corresponding attempt value $DoB_1$-$DoB_3$.

Moreover, the depth of burial engine DOBE elaborates the selected calculated temperature values $T_{C1}$, $T_{C2}$, $T_{C3}$ and the associated attempt values $DoB_1$-$DoB_3$ to generate the one-to-one correspondence CRR(dob,T) between possible depth-of-burial values and possible temperature values.

According to an embodiment, the one-to-one correspondence CRR(dob, T) is under the form of an interpolation curve IC (such as an example, a polygonal chain) passing from any points $(DoB_i, T_{Ci})$ as shown in the example of FIG. 6. The interpolation curve IC defines a temperature trend of the submarine cable 4 as function of the depth of burial.

According to further embodiments, the one-to-one correspondence CRR(dob, T) can be under the form of a mathematical function or a data correlating table.

In the following description reference is made to the particular embodiment in which the one-to-one correspondence CRR(dob, T) is an interpolation curve IC, but the provided description is also valid for the other embodiments of such one-to-one correspondence CRR(dob, T).

The calculated interpolation curve IC resulting from the seventh step 207 and the measured depths M-DOB(t,z), obtained in the first step 201, are provided to the calibration function engine CFE which performs a processing (eight step 208) in order to generate a calibration function, depending on the time, position z and measured temperature value and defined by specific parameters.

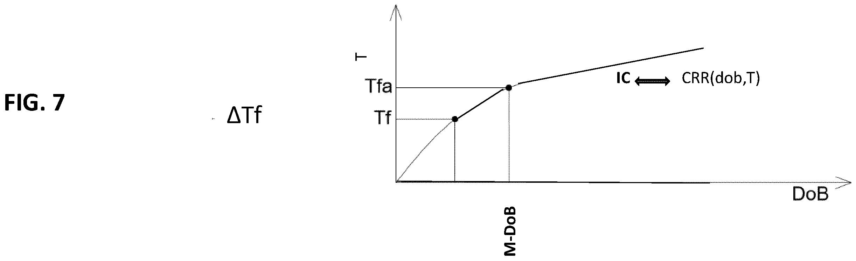

In the eight step 208, for a time step $t_i$ and for each longitudinal position z; a first value $Tfa(t_i, z_i)$ is obtained from the interpolation curve IC (as shown in FIG. 7) by intercepting it with a value assumed by the measured depth $M\text{-}DOB(t_i, z_i)$ described with reference to the first step 201. The first value $Tfa(t_i, z_i)$ represents a temperature that should be measured by the cable sensor 6 to obtain the same value of the depth of burial obtained by the survey of the first step 201, i.e. $M\text{-}DOB(t_i, z_i)$. The second value $Tf(t_i, z_i)$ is obtained from the measurements performed by the sixth step 206.

By repeating the calculation of step 208 for any time steps of the observation period Po and any distance values z, a first temperature trend Tfa(t, z) (associated to the depth obtained by the survey) is obtained.

Moreover, a temperature difference $\Delta Tf(z,t)$ is calculated by computing a difference between the first temperature trend Tfa(t, z) and second temperature trend Tf(t, z), for any time step of the observation period Po and any distances z.

It is noticed that such temperature difference $\Delta Tf(z,t)$, obtained with reference to the observation period Po, is dependent on other measured parameters, such as the temperature Tf(z,t) at the distance z of the sensor 6.

The method 200 comprises a ninth step 209 where a set of error functions $err_j(t, Tf)$ is computed. Each error function $err_j(t, Tf)$ correlates an error temperature $err_j$ (that is a temperature difference) to the measured temperature Tf(z,t), for one position $z_j$ along the submarine cable 4.

To obtain an error function $err_j(t, Tf)$ for the position zj, the set of data Tf(zj,t) related to the temperature measured by the cable sensor 6 is split into a set of vectors containing the temperature values $Tf_{,zj}(t)$ over time, related to the discrete position over the distance zj.

The calibration function $err_j(t, Tf)$ is configured so as it reproduces the temperature difference $\Delta Tf(z,t)$ for time values included in said observation period Po and provides, in a measuring period $P_M$ external to said observation period, a plurality of calibration values each associated to a sensor temperature value assumable by said temperature sensor 6.

More particularly the calibration function $err_j(t, Tf)$ is defined by a first addend depending on systematic errors, a second addend depending on an integral over an observation period $int_j$ which is lower than or equal to the measuring period $P_M$ of a first difference between a temperature trend Tf(z,t), obtained by the temperature sensor 6, and a time average temperature value $T_{0,j}$ and a third addend linearly depending on said first difference. In example, the error function $err_j(t, Tf)$ for a distance zj is defined by the equation below:

$$err_j(t, Tf) = systematic_j + \alpha_j \int_{t-int_j}^{t} (Tf_j(t) - T_{0j}) d\tau + \beta_j (Tf_j(t) - T_{0j}) \quad (1)$$

Where, the following constants CST are defined as follows:

- *systematic*$_j$ is a constant referred to systematic errors;

$\alpha_j$ is a weight constant multiplying an integral part of the equation;

- $int_j$ is a constant related to the time over which the time integral shall be done (i.e. the measuring period $P_M$);
- $T_{0j}$ is a constant related to a reference temperature;
- $\beta_j$ s a weight constant multiplying the proportional part of the equation.

Said constant values CST (as valuated for each distance value $z_j$) can be computed by a machine learning technique or by means of a mathematical procedure. As an example, the constants CST listed are computed by minimizing a statistic quantity (e.g. the squared deviation) expressing a difference between temperature calibration function $err_j(t, Tf)$ and the temperature difference trend $\Delta Tf(z,t)$, obtained as described with reference the eight step 208. This mathematic procedure shall be repeated for all the N points $z_1$-$z_N$ over the part of the route of the submarine cable 4 where the depth of burial computation is requested.

The computed constants CST are stored (for example, in the computer 8) and the method 200 for calibrating the system 100 is ended. The computed constants CST are to be used to fully define the error function $err_j(t, Tf)$, in performing a calculation of depth of burial, in order to correct a measured temperature trend Tf(z,t) provided by the temperature sensor 6.

The calibration procedure described with reference to the method 200 can be repeated during the lifetime of the submarine cable 4 to optimize furtherly its reliability.

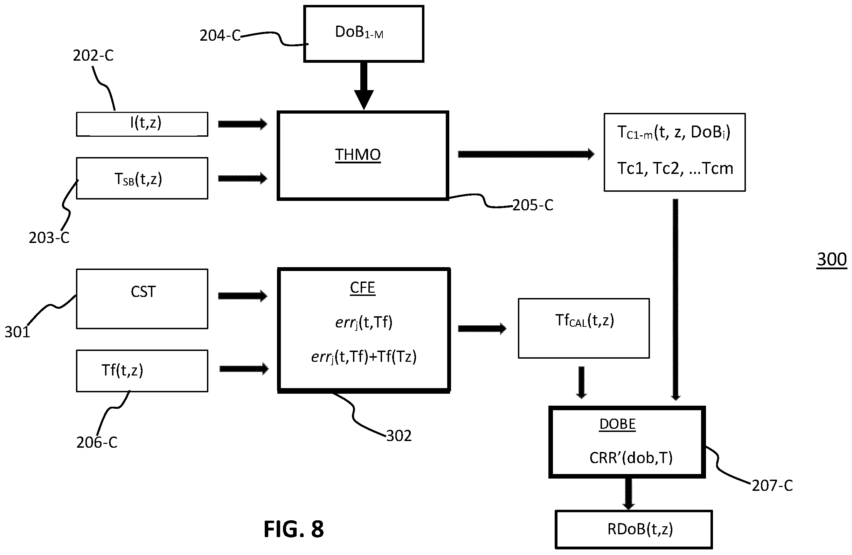

FIG. 8 shows a calculation method 300 configured to calculate the depth of burial of the submarine cable 4. The calculation method 300 can be implemented by the system 100 and operates considering the calibration above described with reference to the method 200. The calculation method 300 is carried out in a measuring interval $P_M$, that is subsequent to the observation interval $P_O$.

The calculation method 300 includes some steps that are analogous to that described above and therefore are indicated in FIG. 8 with the same identification symbols employed in the previously described figures, followed by the letter C.

More particularly, further load current I(t) is measured or estimated (second step 202-C), a further seabed temperature $T_{SB}(t, z)$ is measured (third step 203-C) and a further group of attempt values $DoB_{1-M}$ are defined (fourth step 204-C). According to the fifth step 205-C, the thermal model THMO processes the input functions I(t,z) and $T_{SB}(t, z)$ and calculates a further cable temperature Tc(t, z, $DoB_m$), expressing the temperatures at the position of the temperature sensor 6 as a function of the time t and the longitudinal position z, for each attempt value $DoB_m$ of the group $DoB_{1-M}$.

Moreover, temperature measurements are performed (sixth step 206-C) employing the temperature sensor 6, so as to obtain a further measured temperature trend Tf(t, z), as a function of the time and the distance z.

The constants CST obtained by the ninth step 209 are made available (in a tenth step 301 of FIG. 8) to the calibration function engine CFE. The calibration function engine CFE, basing on the further measured temperature trend Tf(t, z), selects the constant values associated with the distance values z of interests for that depth of burial calculation.

In an eleventh step 302, the selected constant values CST are employed to calculate the error functions $err_j(t, Tf)$, each associated to corresponding distance zj. Moreover, each value of the further measured temperature trend Tf(t, z) is corrected by an associated value of the error functions $err_j(t, Tf)$ (i.e. a value corresponding to specific temperature Tf, distance z and a time step t). The correction is made by adding corresponding values of the measured temperature Tf(t, z) and the error functions $err_j(t, Tf)$, so obtaining a calibrated (i.e. corrected) temperature trend $Tf_{CAL}(t,z)$.

The calibrated temperature trend $Tf_{CAL}(t,z)$ and the plurality of calculated cable temperature Tc(t, z, $DoB_m$) obtained from the thermal model THMO are provided to the depth of burial engine DOBE.

The depth of burial engine DOBE performs (seventh step 207-C) a processing (207) of the further calculated cable temperature trends Tc(t, z, $DoB_m$) and the calibrated temperature trend $Tf_{CAL}(t,z)$ to produce a calculated depth-of-burial trend RDoB(t,z) as function of the time t and the position z. The calculated depth of burial trend RDoB(t, z) is identified by the depth of burial engine DOBE as the function that can be best associated to the calibrated temperature trend $Tf_{CAL}$(t,z) considering the thermal model THMO, i.e. considering the plurality of calculated cable temperatures $T_{C1-m}(t, z, DoB_i)$.

More in details, in the seventh step 207-C a further one-to-one correspondence CRR'(dob, T) is obtained, in a manner analogous to the procedure above described to calculate the one-to-one correspondence CRR(dob, T). This further one-to-one correspondence CRR'(dob, T), which can be, particularly, under the form of an interpolation curve IC, is used to identify a plurality of calculated depth-of-burial values that form the depth-of-burial trend RDoB(t,z). As indicated in FIG. 6, the calculated depth of burial RDoB values are identified from the curve IC as the values corresponding to the calibrated temperature values $Tf_{CAL}$.

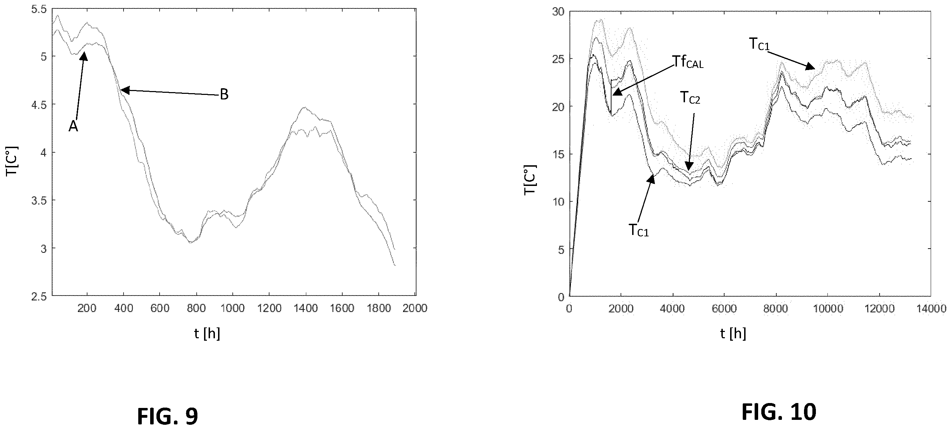

In FIG. 9, an example of comparison between the correction obtained by the error function $errj(t, Tf)$ (curve A) and correction as collected in the set of data associated to temperature difference $\Delta Tf(z,t)$ (curve B) is shown.

FIG. 10 shows, as an example, the three calculated cable temperatures Tc (t, z, $DoB_m$) for three different values of the depth of burial: $T_{C1}$ for 0.5 m, $T_{C2}$ for 1.m and $T_{C3}$ for 4.0 m. Moreover, in FIG. 10 the corrected temperature $Tf_{CAL}(t,z)$ is shown. In the example of FIG. 10 the temperature starts to be adjusted by applying the calibration function $err_j(t, Tf)$ after 1800 h from the beginning of the observation period. The beginning of the adjustment is visible from the abrupt step of the time trend of the corrected measured temperature $Tf_{CAL}(t,z)$.

It is noticed that the method for calibrating 200 and the subsequent depth calculation method 300 allows reduction of the error in the calculated depth of burial due to uncertainties in thermal model parameters or in the load current, cable temperature and seabed measurements.

## Claims

1. Method for calculating (200, 300) the depth of burial of a power cable (4) placed under a bed (3) of an aquatic environment (1), comprising:
   a calibration procedure (200) including:

   providing (202) a current trend ($I(t, z)$) representing a time and position trend of load current flowing in the power cable (4), said time varying in an observation period and said position varying along a route ($Z$) of the power cable (4);
   providing (203) a bed temperature trend ($T_{SB}(t, z)$) representing a time and position trend of a temperature of said bed (3);
   configuring a thermal model software (THMO) representing a thermal behavior of a system comprising: the power cable (4), said bed (3) and a temperature sensor (6) associated to at least a portion of said power cable (4);
   providing (206) by the temperature sensor (6) a measured temperature trend ($Tf(t,z)$) as function of the time and the position;

   processing (204, 205, 207) the current trend ($I(t, z)$) and the bed temperature trend ($T_{SB}(t, z)$), considering the thermal model software, to produce a one-to-one correspondence ($CRR(dob,T)$; $IC$) correlating possible depth-of-burial values with possible temperature values provided by said temperature sensor (6);

   obtaining measured depths ($M\text{-}DOB(t,z)$) from experimental measurements (201) of the depth of burial of said power cable (4);
   processing (208, 209) the measured depths ($M\text{-}DOB(t,z)$), the one-to-one correspondence ($CRR(dob,T)$; $IC$) and the measured temperature trend ($Tf(t,z)$) to obtain a temperature calibration function ($err_j(t,Tf)$) to correct temperature measured values provided by the temperature sensor (6) outside the observation period.

2. Method (200) according to claim 1, wherein said one-to-one correspondence $CRR(dob,T)$ has one of the following forms: interpolation curve ($IC$), mathematical function, correlating data table.

3. Method (200) according to claim 1 or 2, wherein processing (204, 205, 207) the current trend ($I(t, z)$), the bed temperature trend ($T_{SB}(t, z)$), considering the thermal model software, to produce the one-to-one correspondence ($CRR(dob,T)$; $IC$) comprises:

   processing (205) the current trend ($I(t, z)$) and the bed temperature trend ($T_{SB}(t, z)$) by the thermal model software (THMO) to provide calculated cable temperature trends ($Tc(t, z, DoB_m)$; $T_{C1}, T_{C2}, T_{C3}$) each associated to depth-of-burial predefined attempt values ($DoB_{1-M}$; DoB1, DoB2, DoB3),
   processing (207) the calculated cable temperature trends ($Tc(t, z, DoB_m$; $T_{C1}, T_{C2}, T_{C3}$) to produce the one-to-one correspondence ($CRR(dob,T)$; $IC$).

4. Method (200) according to claim 3, wherein processing (208, 209) the measured depths ($M\text{-}DOB(t,z)$), the one-to-one correspondence ($CRR(dob,T)$; $IC$) and the measured temperature trend ($Tf(t,z)$) comprises:

   processing the the measured depths ($M\text{-}DOB(t,z)$), on the basis of the one-to-one correspondence $CRR(dob,T)$ so as to obtain first temperature trend ($Tfa(t,z)$; $Tfa$) associated to the measured depths ($M\text{-}DOB(t,z)$; M-DoB);
   defining a temperature difference trend ($\Delta Tf(z,t)$) by computing a difference between the first temperature trend ($Tfa(t, z)$; $Tfa$) and the measured temperature trend ($Tf(t,z)$)); wherein temperature difference trend ($\Delta Tf(z,t)$) is based on said observation period.

5. Method (200) according to at least claim 4, wherein generating the temperature calibration function ($err_j(t,Tf)$) comprises:
   configuring the calibration function ($err_j(t,Tf)$) so as to reproduce the temperature difference trend ($\Delta Tf(z,t)$) for time values included in said observation period and providing, in a measuring period external to said observation period, a plurality of calibration values each associated to a sensor temperature value assumable by said temperature sensor (6).

6.  Method (200) according to at least claim 5, wherein said temperature calibration function ($err_j$(t,Tf)) is defined by:

    a first addend depending on an integral over the measuring period of a first difference between a temperature trend obtained by the temperature sensor (6) and an average temperature value;
    a second addend linearly depending on said first difference.

7.  Method (200) according to at least claim 6, wherein said temperature calibration function ($err_j$(t,Tf)) is further defined by a plurality of constant values (CST) including:

    - a third addend representing a systematic error;
    - a first weight for the first addend;
    - a second weight for the second addend;
    - a value defining said measuring period.

8.  Method (200) according to at least claim 7, wherein said constant values (CST) are computed by minimizing a statistic quantity expressing a difference between temperature calibration function ($err_j$(t,Tf)) and the temperature difference trend ($\Delta$Tf(z,t)) for the time values included in said observation period.

9.  Method (200) according to at least claim 7, wherein said constant values (CST) are computed by a machine learning technique.

10. Method (200, 300) according at least one of the preceding claims, wherein said thermal model software (THMO) is configured according to the following data: stratigraphy of the power cable (4); positions of the temperature sensor (6) with respect corresponding cross sections of the power cable (4); thermal characteristics of the sand/soil (5) under said bed (3).

11. Method (300) according to at least one of the preceding claims, further comprising:
    a calculation procedure (300) comprising:

    providing (202-C) a further current trend (I(t, z)) representing a corresponding time and position trend of a further load current flowing in the power cable (4) in a time measuring interval;
    providing (203-C) a further bed temperature trend ($T_{SB}$(t, z)) representing a corresponding time and position trend of a further temperature of said bed (3);
    processing (205-C) the further current trend (I(t, z)) and the further bed temperature trend ($T_{SB}$(t, z)) by the thermal model software (THMO) to provide further calculated cable temperature trends (Tc(t, z, $DoB_m$) each associated to corresponding depth-of-burial attempt values ($DoB_{1-M}$),
    providing (206-C) by the temperature sensor (6) a further measured temperature trend (Tf(t,z)) as function of the time and the position;
    correcting (302) said further measured temperature trend (Tf(t,z)) by said temperature calibration function ($err_j$(t,Tf)) obtaining a corrected temperature trend ($Tf_{CAL}$(t,z));
    processing (207-C) the further calculated cable temperature trends (Tc(t, z, $DoB_m$) and the corrected temperature trend ($Tf_{CAL}$(t,z)) to produce a resulting depth-of-burial trend (RDoB(t,z)).

12. Method (300) according to at least claims 11, wherein processing (207-C) the further calculated cable temperature trends (Tc(t, z, $DoB_m$) and the corrected temperature trend ($Tf_{CAL}$(t,z)) to produce the resulting depth-of-burial trend (RDoB(t,z)) comprises:

    processing the further calculated cable temperature trends (Tc(t, z, $DoB_m$) and the corrected temperature trend ($Tf_{CAL}$(t,z)) to produce a further one-to-one correspondence (CRR'(dob,T)) correlating further possible depth-of-burial values with further possible temperature values provided by said temperature sensor (6);
    associating the corrected temperature trend ($Tf_{CAL}$(t,z)) to the resulting depth-of-burial trend (RDoB(t,z)) by means of further one-to-one correspondence (CRR'(dob,T)).

13. Method (200, 300) according at least one of the preceding claims wherein:
    said temperature sensor (6) is one of the following devices: a fiber optic sensor; a Distributed Temperature Sensor system DTS; a plurality of resistance temperature detectors, RTD; wherein:

the temperature sensor (6) is associated to the power cable (4) according one of the following modalities: the temperature sensor (6) is embedded in the power cable (4); the temperature sensor (6) is placed in the proximity of the power cable (4).

14. Cable depth evaluation system (100) comprising:

a temperature sensor (6) associated to at least a portion of a power cable (4) placed under a bed (3) of an aquatic environment (1), the temperature sensor (6) being configured to provide (206) a measured temperature trend (Tf(t,z)) as function of time, varying in an observation period, and position, varying along a route (Z) of the power cable (4);
a processor (8) comprising:

- a thermal model software (THMO) representing a thermal behavior of a thermal system comprising: the power cable (4), said bed (3) and the temperature sensor (6); the thermal model software (THMO);
- a depth-of-burial calculation software (DOBE) cooperating with the thermal model software (THMO) so as to:

acquire (202) a current trend $(I(t, z))$ representing a time and position trend of load current flowing in the power cable (4);
acquire (203) a bed temperature trend $(T_{SB}(t, z))$ representing a time and position trend of a temperature of said bed (3);
process (204, 205, 207) the current trend $(I(t, z))$ and the bed temperature trend $(T_{SB}(t, z))$ considering the thermal model software, to produce a one-to-one correspondence (CRR(dob,T); IC) correlating possible depth-of-burial values with possible temperature values provided by said temperature sensor (6);
acquire measured depths (M-DOB(t,z)) obtained by experimental measurements (201) of the depth of burial of said power cable (4);
process (208, 209) the measured depths (M-DOB(t,z)), the one-to-one correspondence (CRR(dob,T); IC) and the measured temperature trend (Tf(t,z)) to obtain a temperature calibration function $(err_j(t,Tf))$ to correct temperature measured values provided by the temperature sensor (6) outside the observation period.

15. System according to claim 14, wherein:

the thermal model software (THMO) is configured to process (205) the current trend $(I(t, z))$ and the bed temperature trend $(T_{SB}(t, z))$ to provide calculated cable temperature trends $(Tc(t, z, DoB_m)$ each associated to depth-of-burial predefined attempt values $(DoB_{1-M})$,
the depth-of-burial calculation software (DOBE) is configured to process (207) the calculated cable temperature trends $(Tc(t, z, DoB_m)$ to produce the one-to-one correspondence (CRR(dob,T); IC).

16. Electrical power transmission arrangement (200) comprising:

a power cable (4) configured to be placed under a bed (3) of an aquatic environment (1);
a cable depth evaluation system (100) according to claim 14 or 15.

**FIG 1**

FIG 2

FIG. 3

FIG. 4

FIG. 5

$T_{C1}(t, z_j, DoB_1)$

$T_{C3}(t, z_j, DoB_1)$

$T_{C2}(t, z_j, DoB_2)$

$T_f(t, z_j)$

FIG. 6

$T_{C1}$

$T_f(Tf_{CAL})$

$T_{C2}$

$T_{C3}$

T

DoB1

(RDoB)

DoB2

DoB3

DoB

IC

$CRR(dob, T)$ $(CRR'(dob, T))$

**FIG. 7**

EP 4 628 842 A1

204-C — $DoB_{1-M}$

202-C

$I(t,z)$

203-C — $T_{SB}(t,z)$

THMO

205-C

$T_{C1-m}(t, z, DoB_i)$

Tc1, Tc2, ...Tcm

300

301 — CST

$Tf(t,z)$

206-C

CFE

$err_j(t,Tf)$

$err_j(t,Tf)+Tf(Tz)$

302

$Tf_{CAL}(t,z)$

DOBE

CRR'(dob,T)

207-C

RDoB(t,z)

**FIG. 8**

**FIG. 10**

**FIG. 9**

Europäisches
Patentamt

European
Patent Office

Office européen
des brevets

# EUROPEAN SEARCH REPORT

**Application Number**

EP 25 15 6971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 4 119 966 A1 (AP SENSING GMBH [DE]) 18 January 2023 (2023-01-18) * the whole document * | 1-16 | INV. G01B21/18 G01D3/02 G01B21/04 |
| A,D | ZHANG YINING ET AL: "A Burial Depth Detection Method for Three-Core 220 kV Submarine Cables Based on the Optical Fiber Monitoring Temperature", 2023 IEEE 4TH INTERNATIONAL CONFERENCE ON ELECTRICAL MATERIALS AND POWER EQUIPMENT (ICEMPE), IEEE, 7 May 2023 (2023-05-07), pages 1-4, XP034355485, DOI: 10.1109/ICEMPE57831.2023.10139603 * the whole document * | 1-16 | G01B21/08 |
| A | CN 114 993 228 A (POWERCHINA HUADONG ENGINEERING CORP LTD) 2 September 2022 (2022-09-02) * the whole document * | 1-16 | |
| A | CN 117 268 282 A (ELECTRIC POWER RES INSTITUTE CHINA SOUTHERN POWER GRID CO LTD) 22 December 2023 (2023-12-22) * the whole document * | 1-16 | TECHNICAL FIELDS SEARCHED (IPC) G01B G01D |

The present search report has been drawn up for all claims

| Place of search | Date of completion of the search | Examiner |
|---|---|---|
| The Hague | 30 June 2025 | Moulara, Guilhem |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 6971

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | | Publication date | Patent family member(s) | | Publication date |
|---|---|---|---|---|---|
| EP 4119966 | A1 | 18-01-2023 | CN | 117651849 A | 05-03-2024 |
| | | | EP | 4119966 A1 | 18-01-2023 |
| | | | KR | 20240028533 A | 05-03-2024 |
| | | | US | 2024319022 A1 | 26-09-2024 |
| | | | WO | 2023285010 A1 | 19-01-2023 |
| CN 114993228 | A | 02-09-2022 | NONE | | |
| CN 117268282 | A | 22-12-2023 | CN | 117268282 A | 22-12-2023 |
| | | | WO | 2025036501 A1 | 20-02-2025 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4119966 A

**Non-patent literature cited in the description**

- **QISHUN LI** ; **YANPENG HAO** ; **PENG ZHANG et al.** A Method for Detecting the Burial Depth of $\pm$ 500 kV XLPE DC Submarine Cables Based on Equivalent Thermal Circuit and Optical Fiber Monitoring Temperature. *Authorea*, 04 April 2023
- **Y. ZHANG** ; **Q. LI** ; **Y. YANG** ; **P. ZHANG** ; **Y. HAO**. A Burial Depth Detection Method for Three-Core 220 kV Submarine Cables Based on the Optical Fiber Monitoring Temperature. *2023 IEEE 4th International Conference on Electrical Materials and Power Equipment (ICEMPE), Shanghai, China*, 2023, 1-4

- **JONATHAN LUX** ; **THOMAS CZERNIUK** ; **MARTIN OLSCHEWSKI** ; **WIELAND HILL**. Determination of the Depth of Burial of Submarine Power Cables from Temperature Measurements in Real-Time. *10th International Conference on Insulated Power Cables*, June 2019
- **J. LUX** ; **M. OLSCHEWSKI** ; **P. SCHÄFER** ; **W. HILL**. Real-Time Determination of Depth of Burial Profiles for Submarine Power Cables. *IEEE Transactions on Power Delivery*, June 2019, vol. 34 (3), 1079-1086